# DEMANDE DE BREVET EUROPEEN

(11) **EP 1 039 268 A1**
(43) Date de publication de la demande: **27.09.2000**
(21) Numéro de dépôt: 00810233.7
(22) Date de dépôt: 20.03.2000
(51) Int. Cl.: G01D 9/00, G01D 21/02

(54) **Installation de surveillance multi-capteurs**

(30) Priorité: 26.03.1999 CH 58099; 30.04.1999 FR 9905674
(71) Demandeur: C.S.E.M. CENTRE SUISSE D'ELECTRONIQUE ET DE MICROTECHNIQUE SA, 2007 Neuchâtel (CH)
(72) Inventeur: Depeursinge, Yves, 1077 Servion (CH); Monti, Max, 2000 Neuchâtel (CH); Seitz, Peter, 8902 Urdorf (CH)
(74) Mandataire: Gresset, Jean

(57) **Abrégé**

L'invention concerne une installation de surveillance ou de mesure comportant une pluralité de capteurs (14), une unité électronique de gestion (18) destinée à assurer le traitement des informations qu'ils délivrent et des moyens de connexion des capteurs avec l'unité électronique. Ces moyens comportent un ruban souple isolant (12) doté de pistes conductrices (16) et servant, en même temps, de support pour les capteurs.

## Description

La présente invention concerne une installation de surveillance ou de mesure multi-capteurs, c'est-à-dire un équipement comportant une pluralité de capteurs et une unité électronique de gestion connectée à ces capteurs pour assurer, notamment, leur alimentation en énergie électrique et le traitement des informations qu'ils délivrent.

De telles installations trouvent une application dans toutes les situations où il s'agit, à l'aide de capteurs divers, tels que caméras, senseurs optiques, détecteurs de mouvement, senseurs de gaz, capteurs de pression ou capteurs de température, disposés en des endroits différents, de concentrer en un seul endroit, sur un poste de contrôle unique, les informations livrées par ces capteurs. On peut réaliser ainsi, notamment, la surveillance d'un local, d'un magasin, d'un véhicule ou d'un processus industriel.

Dans l'état actuel de la technique, les capteurs sont fixés individuellement aux différents endroits dont il s'agit de prélever une information et reliés séparément, par des lignes appropriées, à l'unité de gestion.

La présente invention a pour but de fournir une installation de surveillance à capteurs multiples améliorée grâce au fait que la fixation de ceux-ci à l'endroit qui leur est alloué et leur connexion avec l'unité de gestion sont très sensiblement simplifiées dans le double but de conférer à l'installation une grande souplesse d'utilisation et de réduire son coût.

De façon plus précise, l'invention concerne une installation de surveillance ou de mesure du type comportant une pluralité de capteurs, une unité électronique de gestion destinée à assurer le traitement des informations qu'ils délivrent et des moyens de connexion des capteurs avec l'unité électronique. L'installation est caractérisée en ce que ces moyens de connexion comportent un ruban souple isolant doté de pistes conductrices et servant, en même temps, de support pour les capteurs.

Les pistes conductrices comportent, de préférence:
- un réseau de pistes formant une ligne bus qui parcourt le ruban sur sensiblement toute sa longueur et aboutit à l'unité électronique, et
- une pluralité de réseaux de pistes reliant individuellement chaque capteur à la ligne bus.

Selon un mode de réalisation avantageux, les capteurs sont fixés sur le ruban et les pistes conductrices sont alors reliées à leurs bornes de contact à l'aide de fils conducteurs.

Selon un autre mode de réalisation avantageux, les capteurs sont disposés à l'intérieur d'ouvertures pratiquées dans le ruban et les pistes conductrices sont alors reliées directement aux bornes de contact des capteurs par leurs extrémités qui débordent à l'intérieur de ces ouvertures.

De préférence, le ruban est en polyimide et les pistes conductrices sont en cuivre.

Enfin, chaque capteur, qui peut être, notamment, une microcaméra, est associé à un circuit d'interface et l'unité électronique de gestion comporte également un circuit d'interface, ces circuits ayant pour fonction d'assurer la liaison entre chaque capteur et l'unité électronique à travers les pistes conductrices.

D'autres caractéristiques et avantages de la présente invention ressortiront de la description qui va suivre, faite en regard du dessin annexé sur lequel:
- la figure 1 est un schéma d'ensemble simplifié d'une installation multi-capteurs conforme à l'invention;
- la figure 2 représente la manière dont les différents capteurs sont disposés sur le ruban souple et reliés électriquement avec l'unité électronique de gestion; et
- la figure 3 illustre une autre manière de fixer et connecter les capteurs.

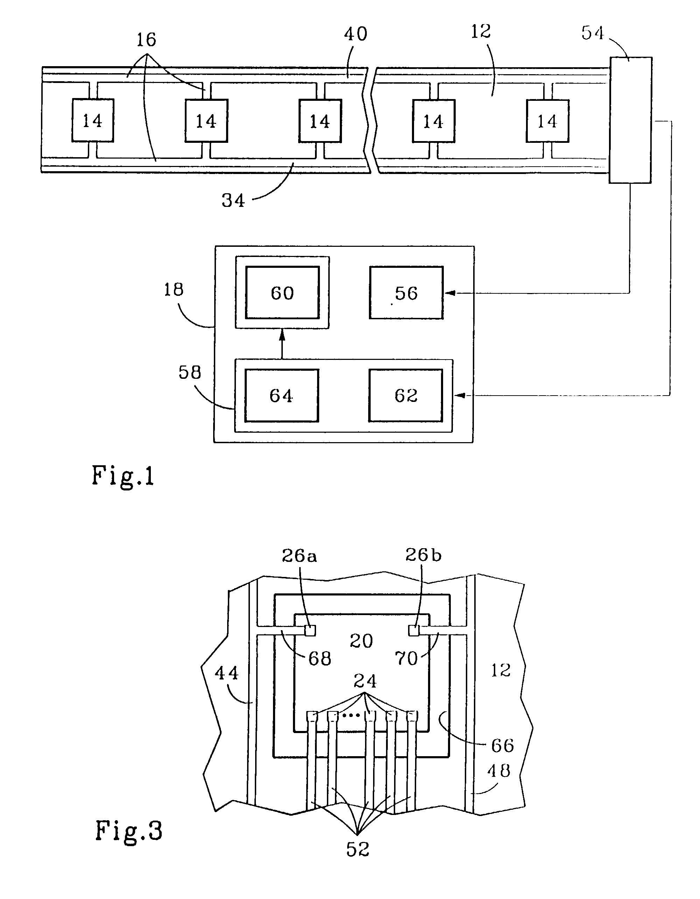

Sur la figure 1, on a représenté en 12 un ruban allongé souple constitué d'un film de polyimide, avantageusement en kapton, sur lequel sont fixés, à intervalles réguliers ou non, avantageusement par collage, une pluralité d'ensembles capteurs 14 qui seront décrits plus loin en détail.

Le film 12 est revêtu d'un réseau de pistes conductrices 16, avantageusement en cuivre, qui relient électriquement les ensembles capteurs 14 à une unité électronique de gestion 18 destinée à assurer leur alimentation en énergie électrique et le traitement des informations qu'ils délivrent.

Typiquement, dans l'exemple décrit, le ruban souple 12 a une épaisseur comprise entre 50 et 125 µm, une largeur de quelques centimètres et une longueur qui, selon l'application, peut aller de quelques mètres à quelques dizaines de mètres. Ce type de circuit imprimé souple est produit notamment par CICOREL SA (CH - 1023 Crissier).

Il faut noter que, sur la figure 1, les rapports dimensionnels du ruban 12 et de l'électronique 18 ne sont pas respectés, cette dernière étant beaucoup plus volumineuse que le ruban.

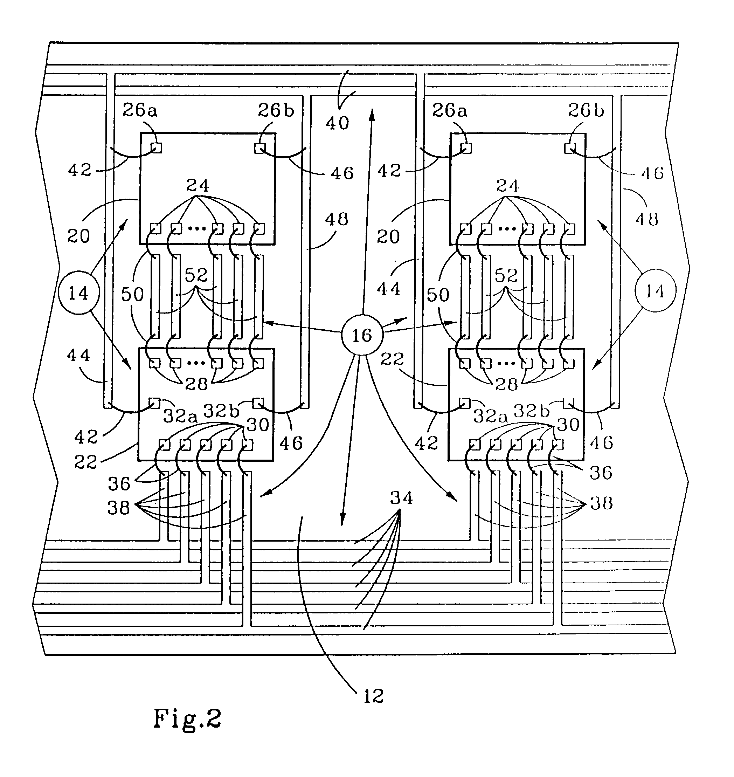

On se référera maintenant à la figure 2 sur laquelle il apparaît que chaque ensemble capteur 14 comporte deux puces électroniques constituées l'une d'un senseur d'image ou microcaméra 20 et l'autre d'un circuit d'interface 22.

La microcaméra 20 est avantageusement du type décrit dans l'article de A. Simoni et Al. "A digital vision sensor" paru dans Sensors and Actuators A 46-46 (1995) 439-443. Il s'agit d'un senseur optique monolithique comportant un réseau de 128 x 128 pixels couplés à 128 amplificateurs de charge suivis de 128 convertisseurs analogique-numérique et délivrant une information de sortie sur 8 bits, disponible sur 8 bornes de contact conductrices (bumps) 24. Le senseur comporte deux autres bornes conductrices 26a-26b destinées à son alimentation.

Dans les applications où l'on s'intéresse à recueillir une image, il est nécessaire d'associer au senseur du type mentionné ci-dessus un système optique capable de former sur sa surface l'image de la scène choisie. Cela peut être réalisé à l'aide de lentilles conventionnelles montées sur le senseur de manière connue de l'homme de métier.

Le circuit d'interface 22 est un pilote de bus sériel, généralement désigné "Universal Serial Bus (USB) driver" qui peut être avantageusement le circuit USB2 Controller commercialisé par Kawasaki LSI U.S.A. Inc. (KLSI). Il a pour fonction d'assurer la liaison entre la puce microcaméra 20 et l'unité électronique de gestion 18 à travers les pistes conductrices 16. Cette puce d'interface 22 est munie d'un premier ensemble de 8 bornes 28, d'un deuxième ensemble de 5 bornes 30 et de deux autres bornes conductrices 32a-32b destinées à son alimentation.

Un premier ensemble de 5 pistes conductrices parallèles 34, formant un bus d'information, est constitué tout au long du bord inférieur (sur la figure) du film souple 12. Par ailleurs, les 5 bornes 30 de chaque puce interface 22 sont respectivement reliées, à l'aide fils 36, à une extrémité d'un ensemble de 5 pistes conductrices parallèles 38 du film souple, dont l'autre extrémité est connectée à l'une des pistes du bus d'information 34. Deux des pistes 38 servent à véhiculer les informations relatives aux images captées par la caméra, tandis que les trois autres sont réservées aux divers signaux de commande de la gestion de ces informations.

Un deuxième ensemble de 2 pistes conductrices parallèles 40, formant un bus d'alimentation, est constitué tout au long du bord supérieur (sur la figure) du film 12. Les bornes 26a de chaque puce microcaméra 20 et les bornes 32a de chaque puce interface 22 sont toutes deux reliées, à l'aide de fils soudés 42, à une piste conductrice 44 du film, aboutissant à l'une des pistes du bus d'alimentation 40. De manière identique, les bornes 26b de chaque puce microcaméra 20 et les bornes 32b de chaque puce interface 22 sont toutes deux reliées, à l'aide de fils 46, à une piste conductrice 48 du film, aboutissant à l'autre piste du bus d'alimentation 40.

Enfin, les 8 bornes 24 de chaque puce microcaméra 20 et les 8 bornes 28 de chaque puce interface 22 sont respectivement reliées entre elles, par l'intermédiaire de fils 50, à 8 pistes conductrices parallèles 52 du film souple.

Se référant de nouveau à la figure 1, on voit que le bus d'information 34 et le bus d'alimentation 40 aboutissent, à l'extrémité du film souple 12, à un connecteur 54 qui les relie à l'unité électronique 18.

Celle unité comporte essentiellement une source d'énergie électrique 56 reliée au bus d'alimentation 40, un ordinateur 58 de type PC relié au bus d'information 34 et un écran vidéo 60 connecté à l'ordinateur. Celui-ci possède un circuit d'interface 62 identique au circuit 22 qui équipe chacun des ensembles capteurs 14 et une carte graphique conventionnelle 64 destinée au pilotage de l'écran 60.

L'ordinateur 58 est programmé de manière à se connecter successivement et cycliquement avec tous les ensembles capteurs 14, à travers le bus d'information 34, pour qu'avec l'aide du circuit d'interface 22 du capteur concerné et de son propre circuit d'interface 62, les données relatives à l'état des 128 x 128 pixels de la microcaméra 20, réparties de manière classique en lignes et colonnes, soient transférées à la carte graphique 64 et qu'ainsi l'écran vidéo 60 affiche l'image captée.

Typiquement, la même opération peut se répéter toutes les minutes. Cela veut dire que l'image captée par l'une des microcaméras 20 est présente sur l'écran pendant une minute, puis que l'on passe à la caméra voisine pendant une minute et ainsi de suite.

Bien entendu, l'opérateur de surveillance peut, à tout moment, interrompre l'interrogation cyclique des caméras pour se fixer plus longuement sur les images fournies par l'une d'elles car celles-ci méritent une attention particulière.

Il faut noter que l'on peut avantageusement tirer parti de la vitesse élevée de transmission des informations pour reconstituer en temps réel une image panoramique de la scène vue par différentes caméras.

La position des caméras l'une par rapport à l'autre étant bien définie du fait qu'elles sont fixées sur le circuit souple, il devient possible d'obtenir des représentations d'une scène en trois dimensions en combinant les informations fournies par deux caméras voisines selon la technique proposée par J. M. Hakkarainen dans l'article " Interaction of algorithm and implementation for analog VLSI stereo vision" paru dans Proc. SPIE, vol. 1473, pp. 1922-1930 (1966).

Une description plus détaillée du programme de l'ordinateur ne sera pas donnée ici, non seulement parce sa réalisation est à la portée de l'homme de métier, mais aussi parce l'invention concerne essentiellement le principe de placer des capteurs de n'importe quel type sur un film de circuit imprimé souple qui a la double fonction de leur servir de support physique et, grâce à ses pistes conductrices, de les alimenter et de les relier électriquement avec unité électronique de gestion.

L'invention se prête particulièrement bien au cas de capteurs constitués de microcaméras mais le principe est applicable également à des senseurs optiques, des détecteurs de mouvement, des senseurs de gaz, des capteurs de pression ou des capteurs de température

Il est important de remarquer que le concept de l'invention permet d'avoir un ruban dont la longueur est très facilement ajustable en fonction des besoins de l'application. Il suffit de le couper à la longueur désirée puis de placer à son extrémité le connecteur 54 qui le relie à l'électronique de gestion.

La présente description a été faite en se référant à des capteurs qui sont simplement collés sur le circuit imprimé souple. La figure 3 montre, cependant, une autre manière de réaliser cette fixation. On voit alors, en prenant l'exemple de la puce microcaméra 20, que celle-ci prend place dans une ouverture 66 pratiquée dans le film souple 12, lequel est alors doté de deux pistes conductrices 68 et 70 s'étendant à l'intérieure de l'ouverture 66 et reliant, d'une part, la piste 44 à la borne 26a et, d'autre part, la piste 48 à la borne 26b. La connexion des extrémités de ces deux pistes aux bornes de la puce est réalisée par soudage. De manière analogue, les 8 pistes 52 se prolongent à l'intérieur de l'ouverture 66 et ont leurs extrémités soudées directement sur les bornes 24.

## Revendications

1. Installation de surveillance ou de mesure comportant une pluralité de capteurs (20), une unité électronique de gestion (18) destinée à assurer le traitement des informations qu'ils délivrent et des moyens de connexion desdits capteurs avec ladite unité électronique, caractérisée en ce que lesdits moyens comportent un ruban souple isolant (12) doté de pistes conductrices (16) et servant, en même temps, de support pour les capteurs.

2. Installation selon la revendication 1, caractérisée en ce que lesdites pistes conductrices comportent:
- un réseau de pistes formant une ligne bus (34, 40) qui parcourt le ruban sur sensiblement toute sa longueur et aboutit à l'unité électronique, et
- une pluralité de réseaux de pistes (38, 44, 48, 52) reliant individuellement chaque capteur à la ligne bus.

3. Installation selon l'une des revendications 1 et 2, caractérisée en ce que les capteurs sont fixés sur le ruban.

4. Installation selon la revendication 3, caractérisée en ce que les capteurs sont dotés de bornes de contact (24, 26a, 26b) et en ce que les pistes conductrices sont reliés auxdites bornes à l'aide de fils conducteurs (42, 46, 50).

5. Installation selon l'une des revendications 1 et 2, caractérisée en ce que les capteurs sont disposés à l'intérieur d'ouvertures (66) pratiquées dans le ruban.

6. Installation selon la revendication 5, caractérisée en ce que les capteurs sont dotés de bornes de contact (24, 26a, 26b) et en ce que les pistes conductrices sont reliées directement auxdites bornes par leurs extrémités qui débordent à l'intérieur desdites ouvertures.

7. Installation selon l'une des revendications 1 à 6, caractérisée en ce que ledit ruban est en polyimide.

8. Installation selon la revendication 7, caractérisée en ce que lesdites pistes conductrices sont en cuivre.

9. Installation selon l'une des revendications 1 à 8, caractérisée en ce que lesdits capteurs sont des microcaméras.

10. Installation selon l'une des revendications 1 à 9, caractérisée en ce que chaque capteur est associé à un circuit d'interface (22) et en ce que l'unité électronique de gestion (18) comporte également un circuit d'interface (62), lesdits circuits ayant pour fonction d'assurer la liaison entre chaque capteur et l'unité électronique à travers les pistes conductrices.
